# EUROPEAN PATENT APPLICATION

(11) **EP 4 723 187 A1**
(43) Date of publication of application: **08.04.2026**
(21) Application number: 24815585.5
(22) Date of filing: 30.05.2024
(51) Int. Cl.: H01M 4/13, H01M 4/48, H01M 10/052, H01M 10/0587

(54) **SECONDARY BATTERY**

(30) Priority: 31.05.2023 JP 2023090228
(71) Applicant: Panasonic Intellectual Property Management Co., Ltd., Kadoma-shi, Osaka 571-0057 (JP)
(72) Inventor: MORI Shinya, Kadoma-shi, Osaka 571-0057 (JP); NATSUMEDA Syunsuke, Kadoma-shi, Osaka 571-0057 (JP); KATO Genichiro, Kadoma-shi, Osaka 571-0057 (JP)
(74) Representative: Novagraaf International SA
(86) International application number: PCT/JP2024/019929
(87) International publication number: WO 2024/248105

(57) **Abstract**

A secondary battery includes a positive electrode 15, a negative electrode 16 including a negative electrode current collector and a negative electrode active material layer provided on a surface of the negative electrode current collector, a separator 17 provided between the negative electrode and the negative electrode, an electrode group 18 configured by winding the positive electrode and the negative electrode with the separator therebetween, an electrolyte, and a battery case that houses the electrode group and the electrolyte. The negative electrode is located at the outermost periphery of the electrode group. The outermost periphery has a current collector exposed portion 161A where the negative electrode current collector is exposed. The expansion percentage of the negative electrode active material layer in negative electrode charging and discharging is higher at its edge parts 16B and 16C in the widthwise direction parallel to the winding axis of the negative electrode than at its central part 16A in the widthwise direction.

## Description

### [Technical Field]

The present disclosure relates to a secondary battery.

### [Background Art]

Negative electrode active materials capable of absorbing and releasing lithium ions are used in the negative electrodes of secondary batteries, as typified by a lithium-ion secondary battery. Graphite is generally used as such a negative electrode active material. In recent years, composite materials containing silicon, which have a higher capacity density than graphite, have been studied as the negative electrode active material.

Materials containing the element silicon are promising negative electrode materials for high-capacity secondary batteries. However, since a material containing the element silicon significantly expands and contracts during charging and discharging, the negative electrode is likely to expand with charging.

Patent Literature 1 discloses a nonaqueous electrolyte secondary battery including an electrode body in which a positive electrode and a negative electrode are wound with a separator therebetween, wherein the negative electrode contains a first negative electrode active material and a second negative electrode active material having a higher expansion coefficient during charging than that of the first negative electrode active material, and when the ratio of the mass of the second negative electrode active material to the total mass of the first negative electrode active material and the second negative electrode active material is defined as a second negative electrode active material ratio, the second negative electrode active material ratio on the winding inner end side is set smaller than the second negative electrode active material ratio on the winding outer end side. Patent Literature 1 proposes to suppress the occurrence of internal short circuits in the vicinity of the winding inner end of the electrode body by the above configuration.

### [Citation List]

### [Patent Literature]

[Patent Literature 1] International Publication No. 2022/024712

### [Summary of Invention]

### [Technical Problem]

When a negative electrode active material having a high expansion coefficient during charging is used, the contact pressure of the central part of the electrode body in the winding axis direction is likely to be higher than the contact pressure of the upper and lower edge parts thereof in the winding axis direction. As a result, a short circuit due to deformation of the electrode group may occur.

### [Solution to Problem]

One aspect of the present disclosure relates to a secondary battery including: a positive electrode; a negative electrode including a negative electrode current collector and a negative electrode active material layer provided on a surface of the negative electrode current collector; a separator provided between the positive electrode and the negative electrode; and an electrode group configured by winding the positive electrode and the negative electrode with the separator therebetween; an electrolyte; and a battery case that houses the electrode group and the electrolyte, wherein the negative electrode is located at an outermost periphery of the electrode group, the negative electrode at the outermost periphery has a current collector exposed portion where the negative electrode current collector is exposed, and an expansion percentage of the negative electrode active material layer in negative electrode charging and discharging is higher at edge parts in a widthwise direction thereof than at a central part in the widthwise direction thereof, the widthwise direction being parallel to a winding axis of the negative electrode.

### [Advantageous Effects of Invention]

According to the present disclosure, a contact pressure difference generated between the central part and the upper and lower edge parts of the electrode group can be reduced to suppress the occurrence of short circuits caused by deformation of the electrode group.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] FIG. 1 is a schematic diagram illustrating an exemplary negative electrode used in a secondary battery according to an embodiment of the present disclosure.
[FIG. 2] FIG. 2 is a schematic longitudinal cross-sectional view of a secondary battery according to an embodiment of the present disclosure.

### [Description of Embodiments]

Embodiments of the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained. It should be noted that an element of configuration known in the field of secondary batteries may be employed as an element of configuration other than the characteristic parts of the present disclosure. In the present description, the phrase "a numerical value A to a numerical value B" means to include the numerical value A and the numerical value B. In the following description, when the lower and upper limits of numerical values related to specific physical properties, conditions, or the like are mentioned as examples, any of the mentioned lower limits and any of the mentioned upper limits can be combined in any combination as long as the lower limit is not equal to or more than the upper limit. When a plurality of materials are mentioned as examples, one type of them may be selected and used alone, or two or more types of them may be used in combination.

The present disclosure encompasses a combination of matters recited in any two or more claims selected from multiple claims in the appended claims. In other words, as long as no technical contradiction arises, matters recited in any two or more claims selected from multiple claims in the appended claims can be combined.

A secondary battery according to an embodiment of the present disclosure includes a positive electrode, a negative electrode, a separator provided between the positive electrode and the negative electrode, an electrode group configured by winding the positive electrode and the negative electrode with the separator therebetween, an electrolyte, and a battery case that houses the electrode group and the electrolyte. The negative electrode includes a negative electrode current collector and a negative electrode active material layer provided on a surface of the negative electrode current collector. Similarly, the positive electrode can be configured with a positive electrode current collector and a positive electrode active material layer provided on a surface of the positive electrode current collector.

With charging, a negative electrode active material contained in the negative electrode active material expands to swell the negative electrode active material layer. When the expansion percentage of the negative electrode active material layer is the same between at the edge parts and at the central part in the widthwise direction parallel to the winding axis of the negative electrode, the contact pressure applied to the central part is generally higher than that applied to the edge parts. As a result, the electrode group may be deformed such that the central part protrudes outward in the radial direction perpendicular to the winding axis (e.g., the outer shape of the electrode group is deformed from a cylindrical shape to a barrel shape). This may cause an internal short circuit or a current collection defect at the upper or lower edge part.

Further, the electrolyte is pushed out toward the edge parts where the contact pressure is low from the central part where the contact pressure is high, so that the electrolyte in the central part is reduced. As a result of the imbalance distribution of the electrolyte such as above, the charge-discharge reaction may be uneven in the direction along the winding axis, which may deteriorate battery properties such as cycle characteristics.

However, according to the secondary battery of the present embodiment, the expansion percentage of the negative electrode active material layer is higher at the edge parts than at the central part in the widthwise direction parallel to the winding axis of the negative electrode. Thus, the difference between the contact pressure generated at the central part and that at the edge parts can be reduced in a manner that the contact pressure applied to the edge parts is increased by increasing the expansion percentage at the edge parts (or the contact pressure applied to the central part is reduced by reducing the expansion percentage at the central part). Accordingly, short circuits caused by the protrusion and deformation of the central part of the electrode group and a current collection defect at the upper or lower edge part can be suppressed. In addition, uneven charge-discharge reaction can be suppressed to suppress deterioration of the battery properties such as the cycle characteristics.

Here, the expansion percentage at a certain area of the negative electrode active material layer means a ratio B (= T_{C}/T_{D}) of a thickness T_{C} at the area of the negative electrode active material layer in the fully charged state to a thickness T_{D} thereof in a discharged state. The thickness T_{C} is determined in a manner that the negative electrode is taken out by decomposing a secondary battery in a fully charged state, the thickness of the negative electrode after washing with an organic solvent is measured using a constant pressure thickness gauge, and the thickness of the negative electrode current collector is subtracted. The thickness T_{D} is determined in a manner that the negative electrode is taken out by decomposing the secondary battery in the discharged state, the thickness of the negative electrode after washing with an organic solvent is measured using the constant pressure thickness gauge, and the thickness of the negative electrode current collector is subtracted.

The fully charged state of the secondary battery refers to a state in which, when the rated capacity of the battery is C, the battery is charged to, for example, 0.98 × C or more (SOC = 98% or more). The discharged state refers to a state in which the battery is discharged to 0.02 × C or less (DOD = 98% or more).

Given that a width W is a length of the negative electrode active material layer in the widthwise direction parallel to the winding axis, the central part of the negative electrode active material layer includes, in the widthwise direction, a point W/2 apart from one of edges in the widthwise direction of the negative electrode active material layer, and a region of the negative electrode active material layer ranging from, for example, 0.4 W to 0.6 W from the one edge thereof in the widthwise direction. A region where the negative electrode current collector is exposed may be provided at one edge part of the negative electrode in the widthwise direction. However, the width W does not include the part where the negative electrode active material layer is not provided, even at the one edge part of the negative electrode. The width of the central part of the negative electrode active material layer in the widthwise direction is preferably 20% to 60% of the width W of a part of the negative electrode where the negative electrode active material layer is provided.

The edge parts of the negative electrode active material layer include one edge (upper edge) and the other edge (lower edge) in the widthwise direction of the region where the negative electrode active material layer is provided in the negative electrode, and preferably include, for example, regions each having a width of 0.1W from the upper edge and the lower edge.

The negative electrode may be provided on the outer peripheral side of the positive electrode in the electrode group. The negative electrode is located at the outermost periphery of the electrode group. The negative electrode at the outermost periphery of the electrode group has a current collector exposed portion where the negative electrode current collector is exposed. In this configuration, the current collector exposed portion of the negative electrode can be in face contact with the battery case at least in a charged state. This can improve current collecting properties and reduce the internal resistance, thereby improving power output performance particularly at high loads.

However, as described above, as the negative electrode active material layer expands with charging, the electrode group may deform such that the central part protrudes radially outward. As a result of the deformation, the contact between the current collector exposed portion and the battery case becomes line contact or point contact via the central part of the electrode group, so that the upper edge part and the lower edge part of the electrode group are out of contact with the battery case. As a result, it is conceivable that the inner resistance increases and power output performance cannot be maintained high.

By contrast, in the secondary battery according to the present embodiment, the difference between the contact pressure at the central part and that at the edge parts is reduced by setting the expansion percentage higher at the edge parts than at the central part of the negative electrode active material layer in the widthwise direction parallel to the winding axis. This can suppress the deformation of the electrode group during charging to maintain the surface contact between the current collector exposed portion and the battery case, thereby maintaining the power output performance high.

The current collector exposed portion where the negative electrode current collector is exposed occupies 50% or more of the outer surface of the negative electrode located at the outermost periphery of the electrode group on an area basis, or 70% or more thereof may be the current collector exposed portion.

Given that B₁ represents the expansion percentage at the central part of the negative electrode active material layer and B₂ (B₁ < B₂) represents the expansion percentage at the edge parts of the negative electrode active material layer, the ratio B₁/ B₂ is less than 1 and preferably 0.985 or more (98.5% or more).

The smaller B₁ relative to B₂, the lower the contact pressure at the central part. Accordingly, the deformation of the electrode group during charging is suppressed, and favorable surface contact between the current collector exposed portion and the battery case can be maintained. In addition, extrusion of the electrolyte from the central part toward the edge parts is suppressed to suppress the deterioration of the battery properties typified by cycle characteristics. By contrast, when B₁ is excessively small relative to B₂, the contact pressure at the central part may be so low to readily cause deformation in which the edge parts of the electrode portion protrudes further than the central part during charging, and the contact between the current collector exposed portion and the battery case may become line contact or point contact via the upper and lower edge parts of the electrode group. In addition, the electrolyte remains in the central part and is less distributed at the edge parts, with a result that the deterioration of the battery properties cannot be suppressed in some cases. When the expansion percentage B₁ is 98.5% or more of the expansion percentage B₂, the deformation of the electrode group during charging is remarkably suppressed, and favorable surface contact can be maintained between the current collector exposed portion and the battery case. In addition, the effect of suppressing the battery property deterioration is enhanced.

As described above, the expansion percentage B means the percentage of the thickness of a predetermined region of the negative electrode active material layer in the fully charged state to the thickness thereof in the discharged state. Therefore, when the thickness of the negative electrode active material layer in the discharged state is the same between at the central part and at the edge parts, the ratio B₁/B₂ of the expansion percentages is equal to the ratio of the thickness of the central part of the negative electrode active material layer in the fully charged state to the thickness of the edge parts of the negative electrode active material layer in the fully charged state.

The expansion percentage of the negative electrode active material layer depends on the expansion percentage during charging of the materials (particularly, the negative electrode active material) contained in the negative electrode active material layer. The larger the amount of the negative electrode active material that readily expands during charging, the higher the expansion percentage of the negative electrode active material layer. For example, a silicon-containing material is known as a negative electrode active material that has a high theoretical capacity but also exhibits a large degree of expansion during charging

The negative electrode active material layer may contain a silicon-containing material as a negative electrode active material. The higher the content of the silicon-containing material in the negative electrode active material layer, the higher the capacity and the higher the expansion percentage B of the negative electrode active material layer. However, the difference between the contact pressure at the edge parts and that at the central parts of the negative electrode active material layer can be reduced and short circuits and battery property deterioration due to deformation of the electrode group can be suppressed by setting the expansion percentage B₂ at the edge parts of the negative electrode active material layer higher than the expansion percentage B₁ at the central part of the negative electrode active material layer.

The expansion percentages B₁ and B₂ can be controlled by adjusting the content percentage of the negative electrode active material in the negative electrode active material layer. For example, in the case using a negative electrode active material containing a silicon-containing material, the content percentage of the silicon-containing material at the edge parts of the negative electrode active material layer may be set higher than the content percentage of the silicon-containing material at the central part of the negative electrode active material layer. In the case in which a plurality of negative electrode active materials are contained in the negative electrode active material layer in combination, the content percentages of the negative electrode active materials may differ between at the edge parts and at the central part. As a result, a negative electrode including a negative electrode active material layer in which the expansion percentage B₂ at the edge part is higher than the expansion percentage B₁ at the central part is obtained.

The secondary battery may be a nonaqueous electrolyte secondary battery. A nonaqueous electrolyte secondary battery is a secondary battery including a liquid, gel, or solid nonaqueous electrolyte, and encompasses, for example, lithium-ion secondary batteries, lithium secondary batteries, and all solid secondary batteries.

Hereinafter, an embodiment of the secondary battery according to the present disclosure will be further described with reference to the drawings. In the drawings, the shapes or features of the components do not necessarily reflect actual dimensions and are not necessarily represented to scale.

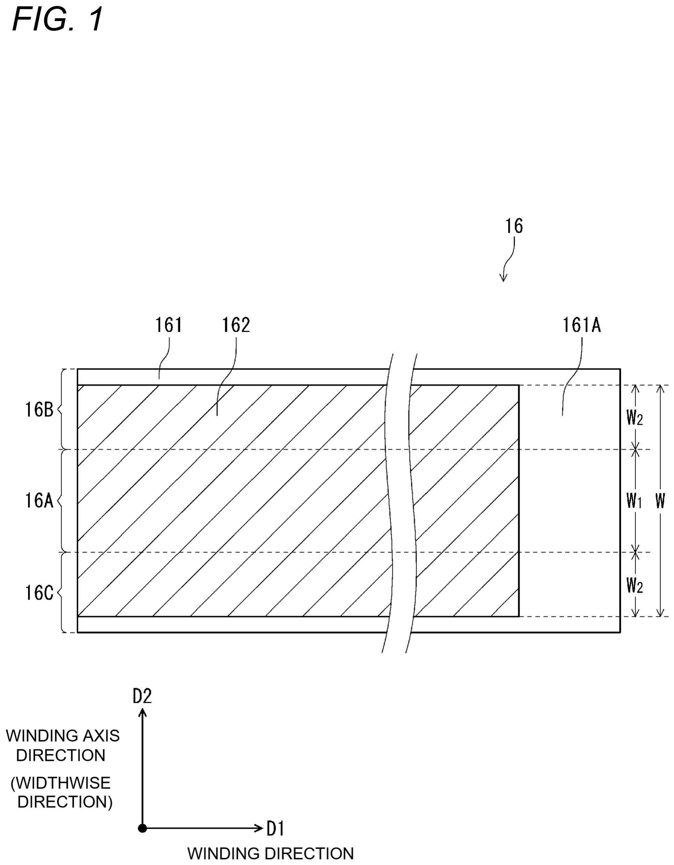

FIG. 1 is a schematic diagram illustrating an exemplary negative electrode used in a secondary battery according to an embodiment of the present disclosure and illustrates a state of the negative electrode prior to forming an electrode group by winding it together with a positive electrode and a separator.

A negative electrode 16 has a band shape having a length (width) in a winding direction D1 longer than a length in a direction D2 parallel to the winding axis. The winding direction D1 is a direction perpendicular to the winding axis. The direction D2 parallel to the winding axis is also referred to hereinafter as "widthwise direction D2". The negative electrode 16 includes a negative electrode current collector 161 and a negative electrode active material layer 162 formed on the negative electrode current collector 161.

The negative electrode 16 has a central part 16A located at the center in the widthwise direction D2 and edge parts 16B and 16C adjacent to the central part 16A. The edge parts 16B and 16C are edge parts (an upper edge part and a lower edge part) of the negative electrode 16 in the widthwise direction D2 and are located opposite each other with the central part 16A therebetween.

The expansion percentage B₂ at the edge parts 16B and 16C of the negative electrode active material layer 162 is higher than the expansion percentage B₁ at the central part 16A of the negative electrode active material layer 162. In the above configuration, when the secondary battery is formed using an electrode group in which the negative electrode 16 is wound together with the positive electrode and the separator, the difference between the contact pressure at the edge parts 16B and 16C and that at the central part 16A of the negative electrode active material layer can be reduced, and deformation in which the central part 16A protrudes in the electrode group is suppressed. In addition, migration of the electrolyte solution from the central part 16A toward the edge parts 16B and 16C can be suppressed, and the deterioration of the battery characteristics such as the cycle characteristics can be suppressed.

The negative electrode active material layer 162 is not formed at an edge part in the winding in the winding direction D1 on the outer peripheral side and has an exposed portion 161A where the negative electrode current collector 161 is exposed. The exposed portion 161A of the negative electrode current collector 161 constitutes a surface exposed to the outermost periphery of the electrode group when the electrode group is formed. In the secondary battery at least in a charged state, the exposed portion 161A is in surface contact with and electrically connected to the inner surface of the battery case.

Given that W represents the width of the negative electrode active material layer 162 in the widthwise direction D2. A width W₁ of the central part 16A in the widthwise direction D2 is, for example, in the range of 0.2W to 0.9W or 0.2W to 0.6W. A width W₂ of each of the edge parts 16B and 16C in the widthwise direction D1 is, for example, in the region of 0.05W to 0.4W or 0.05W to 0.2W.

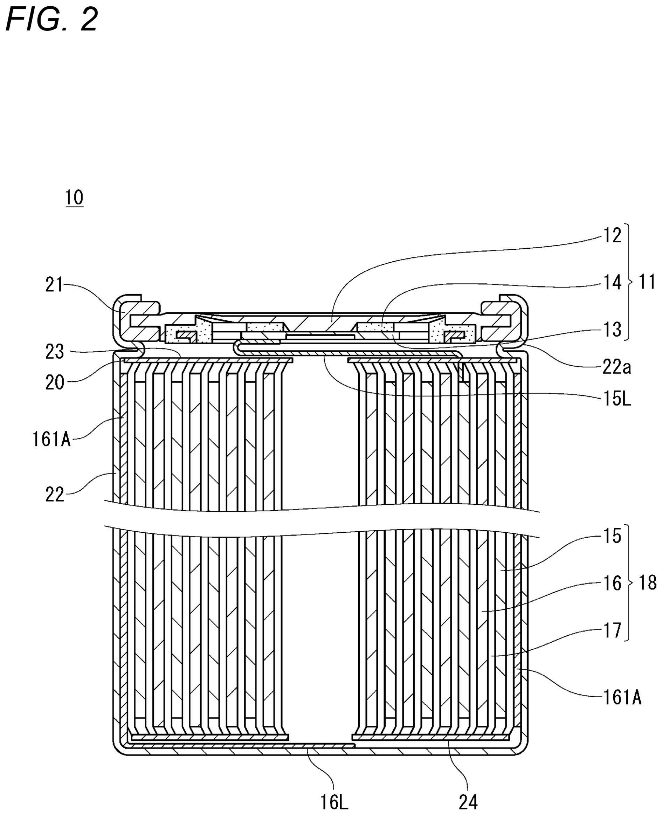

FIG. 2 is a schematic longitudinal cross-sectional view of a secondary battery according to an embodiment of the present disclosure. A secondary battery (hereinafter referred to as battery) 10 is cylindrical and includes an electrode group 18, a nonaqueous electrolyte (not illustrated), and a battery case (battery can) 22 that houses these. The electrode group 18 is formed by winding a positive electrode 15 and a negative electrode 16 with a separator 17 therebetween. An annular groove 22a is formed in the vicinity of the opening end of the battery can 22.

The opening of the battery can 22 is sealed with a sealing body 11 equipped with a gasket 21 at its peripheral edge. The sealing body 11 includes a valve body 12, a metal plate 13, and an annular insulating member 14 provided between the outer peripheral part of the valve body 12 and the outer peripheral part of the metal plate 13. The valve body 12 and the metal plate 13 are connected to each other at their central parts. A positive electrode lead 15L led out of the positive electrode 15 is connected to the metal plate 13. In the above configuration, the valve body 12 functions as a positive electrode external terminal. A negative electrode lead 16L led out of the negative electrode 16 is connected (welded) to the inner surface of the bottom of the battery can 22. A first insulating plate 24 is provided between one end surface of the electrode group 18 and the bottom of the battery can 22. A second insulating plate 23 is provided between the sealing body 11 and the other end surface of the electrode group 18.

The secondary battery may be of, for example, cylindrical shape, coin shape, or button shape, with a metal-made battery case, or may be a laminate-type battery including a battery case formed of a laminated sheet of a barrier layer and a resin sheet. In the present disclosure, no particular limitations are placed on the type, shape, and the like of the secondary battery.

Next, a secondary battery according to an embodiment of the present disclosure will be described in detail. The secondary battery includes, for example, the following positive electrode, negative electrode, electrolyte solution (nonaqueous electrolyte), and separator.

### [Positive Electrode]

The positive electrode includes, for example, a positive electrode current collector and a positive electrode active material layer (positive electrode mixture layer) formed on a surface of the positive electrode current collector and containing a positive electrode active material. The positive electrode mixture layer can be formed by applying a positive electrode slurry, in which a positive electrode mixture is dispersed in a dispersion medium, to the surface of the positive electrode current collector, followed by drying. The applied film after being dried may be rolled as necessary. The positive electrode mixture layer may be formed on one surface of the positive electrode current collector or may be formed on both surfaces. The positive electrode mixture contains a positive electrode active material as an essential component, and may contain, for example, a binder, a thickener, and the like as optional components.

The positive electrode active material should be any material that can be used as a positive electrode active material of a nonaqueous electrolyte secondary battery (particularly a lithium-ion secondary battery), but preferably contains a lithium-transition metal composite oxide (composite oxide N) containing at least nickel as a transition metal from the viewpoint of increasing the capacity. The proportion of the composite oxide N in the positive electrode active material is, for example, 70% by mass or more, and may be 90% by mass or more or 95% by mass or more.

The composite oxide N may be, for example, a lithium-transition metal composite oxide having a layered rock salt structure and containing Ni and at least one selected from the group consisting of Co, Mn, and Al. Hereinafter, a lithium-transition metal composite oxide having a layered rock salt structure, containing Ni and at least one selected from the group consisting of Co, Mn, and Al, and having a proportion of Ni in metal elements other than Li of 80 at% or more is also referred to as "composite oxide HN". The proportion of the composite oxide HN in the composite oxide N used as the positive electrode active material is, for example, 90% by mass or more, and may be 95% by mass or more or 100%. As the proportion of Ni increases, more lithium ions can be desorbed from the composite oxide HN during charging. This increases the capacity. Co, Mn, and Al contribute to stabilization of the crystal structure of the composite oxide HN having a high Ni content.

The composite oxide HN may be represented, for example, by the formula: LiₐNi_{(1-x1-x2-y- z)}Coₓ₁Mnₓ₂Al_{y}M_{z}O_{2+β}. The element M is an element other than Li, Ni, Co, Mn, Al, and oxygen. Mn contributes to stabilization of the crystal structure of the composite oxide HN, and it is advantageous for cost reduction that the composite oxide HN contains inexpensive Mn. Al contributes to stabilization of the crystal structure of the composite oxide HN.

In the above formula, α representing the atomic ratio of lithium satisfies 0.95 ≤ α ≤ 1.05, for example. α increases or decreases depending on charging and discharging. The above range of α indicates a value in the discharged state. In (2 + β) representing the atomic ratio of oxygen, β satisfies -0.05 ≤ β ≤ 0.05.

The atomic ratio of Ni given by 1 - x1 - x2 - y - z (= v) is, for example, 0.8 or more, and may be 0.85 or more, 0.90 or more, or 0.95 or more. Further, v may be 0.98 or less, or 0.95 or less. x1 indicating the atomic ratio of Co is 0.1 or less (0 ≤ x1 ≤ 0.1), for example. x2 indicating the atomic ratio of Mn is 0.1 or less (0 ≤ x2 ≤ 0.1), for example. y indicating the atomic ratio of Al is 0.1 or less (0 ≤ y ≤ 0.1), for example. z indicating the atomic ratio of the element M is 0 ≤ z ≤ 0.10, for example.

The element M may be at least one selected from the group consisting of Ti, Zr, Nb, Mo, W, Fe, Zn, B, Si, Mg, Ca, Sr, Sc, and Y. It is considered when at least one selected from the group consisting of Nb, Sr, and Ca among these is contained in the composite oxide HN, the surface structure of the composite oxide HN is stabilized, resistance is reduced, and metal elution is further suppressed. It is further effective when the element M is unevenly distributed in the vicinity of the particle surfaces of the composite oxide HN.

The content of each metal element contained in the lithium-containing composite oxide is determined, for example, by inductively coupled plasma (ICP) emission spectroscopy.

As the binder of the positive electrode, a resin material is used, for example. Examples of the binder include fluorocarbon resins, polyolefin resins, polyamide resins, polyimide resins, acrylic resins, and vinyl resins. One binder may be used alone, or two or more binders may be used in combination.

Examples of a conductive material include carbon nanotube (CNT), carbon fibers other than CNT, and conductive particles (e.g., carbon black and graphite).

The dispersion medium used in the positive electrode slurry is not particularly limited, and examples thereof include water, alcohols, N-methyl-2-pyrrolidone (NMP), and mixed solvents of these.

As the positive electrode current collector, a metallic foil can be used, for example. The positive electrode current collector may be porous. Examples of the porous current collector include nets, punched sheets, and expanded metal sheets. Examples of the material of the positive electrode current collector include stainless steel, aluminum, aluminum alloys, and titanium. The thickness of positive electrode current collector is not particularly limited, but is, for example, 1 to 50 µm and may be 5 to 30 µm.

### [Negative Electrode]

The negative electrode includes, for example, a negative electrode current collector and a negative electrode active material layer formed on a surface of the negative electrode current collector. The negative electrode current collector is formed of a sheet-shaped conductive material. The negative electrode active material layer is carried on one or both surfaces of the negative electrode current collector. The negative electrode active material layer is usually a layer or film made of a negative electrode mixture. The thickness of the negative electrode active material is 10 µm to 150 µm per side of the negative electrode current collector, for example. The negative electrode active material layer can be formed, for example, by applying a negative electrode slurry, in which a negative electrode mixture is dispersed in a dispersing medium, to the surface of the negative electrode current collector, followed by drying. The applied film after being dried may be rolled as necessary. The negative electrode active material layer may be formed on one surface of the negative electrode current collector or on both surfaces thereof.

The negative electrode mixture contains a negative electrode active material as an essential component, and may contain, for example, a binder, a conductive agent, and a thickener as optional components. The negative electrode active material includes a material that electrochemically absorbs and releases lithium ions. As the material that electrochemically absorbs and releases lithium ions, a carbon material, an Si-containing material, or the like can be used. Examples of the Si -containing material include silicon oxides (SiOx: 0.5 ≤ x ≤ 1.5) and composite materials containing a silicate phase and silicon particles dispersed in the silicate phase.

Examples of the carbon material include graphite, graphitizable carbon (soft carbon), and non-graphitizable carbon (hard carbon). Among these, graphite, which has excellent charge and discharge stability and a small irreversible capacity, is preferable. Graphite means a material having a graphite-type crystal structure, examples of which include natural graphite, artificial graphite, and graphitized mesophase carbon particles. One carbon material may be used alone or two or more carbon materials are used in combination.

Among these negative electrode active materials, a composite material containing a silicate phase and silicon particles dispersed in the silicate phase allows arbitrary selection of the content of silicon particles. Thus, a high capacity is likely to be achieved. Here, the silicate phase is a composite oxide phase containing silicon, oxygen, an alkali metal, and the like. Hereinafter, a composite material whose silicate phase is a lithium silicate phase containing silicon, oxygen, and lithium is also referred to as "LSX". The higher the content of the silicon particles in the LSX, the higher the negative electrode capacity. The LSX absorbs lithium ions through alloying of silicon with lithium. An increased content of the silicon particles is expected to provide a high capacity.

The crystallite size of the silicon particles dispersed in the lithium silicate phase is 5 nm or more, for example. The silicon particles have a particulate phase of elemental silicon (Si). When the crystallite size of the silicon particles is 5 nm or more, the surface area of the silicon particles can be small. Therefore, the deterioration of the silicon particles in association with the generation of irreversible capacity is less likely to occur. The crystallite size of the silicon particles is calculated from the half-width of the diffraction peak assigned to the Si (111) plane of the X-ray diffraction (XRD) pattern of the silicon particles by the Scherrer equation.

As the negative electrode active material, the LSX and a carbon material may be used in combination. Since the volume of the LSX expands and contracts with charging and discharging, contact failure between the negative electrode active material and the negative electrode current collector tends to occur in charging and discharging as the proportion of the LSX in the negative electrode active material increases. By contrast, the combinational use of the LSX and a carbon material can achieve excellent cycle characteristics while imparting the high capacity of the silicon particles to the negative electrode. The proportion of the LSX to the total of the LSX and the carbon material is preferably 3 to 30% by mass, for example. This can achieve both increased capacity and improved cycle characteristics.

As described above, the negative electrode includes the central part and the edge parts, and the expansion percentage at each edge part of the negative electrode active material layer is higher than the expansion percentage at the central part of the negative electrode active material layer. The negative electrode active material layer having different expansion percentages can be formed, for example, in a manner that a negative electrode slurry, in which a negative electrode mixture containing a first negative electrode active material is dispersed in a dispersion medium, is applied to the central part of the negative electrode current collector in the widthwise direction, and a negative electrode slurry, in which a negative electrode mixture containing a second negative electrode active material having an expansion percentage higher than that of the first negative electrode active material is dispersed in a dispersion medium, is applied to the edge parts of the negative electrode current collector in the widthwise direction, and the slurries are dried. The first negative electrode active material and the second negative electrode active material may each be a mixture of a plurality of active materials having different expansion percentages. The mixing ratio of the active materials may be differentiated between the first negative electrode material and the second negative electrode active material. For example, the first negative electrode active material and the second negative electrode active material may each be a mixture of a first material and a second material having an expansion percentage during charging higher than that of the first material, and the content ratio of the second material to the total of the first material and the second material in the second negative electrode active material may be set higher than the content ratio of the second material to the total of the first material and the second material in the first negative electrode active material. The first material may be a graphite material, for example. The second material may be a silicon-containing material, for example.

As the negative electrode current collector, a metal foil can be used, for example. The negative electrode current collector may be porous. Examples of the material of the negative electrode current collector include stainless steel, nickel, nickel alloys, copper, and copper alloys. The thickness of the negative electrode current collector is not particularly limited, but may be, for example, 1 to 50 µm and may be 5 to 30 µm.

As the binder of the negative electrode, a resin material is used, for example. Examples of the binder include fluorocarbon resins, polyolefin resins, polyamide resins, polyimide resins, acrylic resins, vinyl resins, and rubbery materials (e.g., styrene butadiene copolymers (SBR)). One binder may be used alone, or two or more binders may be used in combination.

Examples of the thickener include cellulose derivatives such as cellulose ethers. Examples of the cellulose derivatives include carboxymethylcellulose (CMC) and a modified product thereof, and methylcellulose. One thickener may be used alone, or two or more thickeners may be used in combination.

Examples of the conductive material include carbon nanotube (CNT), carbon fibers other than CNT, and conductive particles (e.g., carbon black and graphite).

The dispersion medium used in the negative electrode slurry is not particularly limited, and examples thereof include water, alcohols, N-methyl-2-pyrrolidone (NMP), and mixed solvents of these.

### [Nonaqueous Electrolyte]

The nonaqueous electrolyte contains a nonaqueous solvent and a solute dissolved in the nonaqueous solvent. The solute contains a lithium salt, for example. A component other than the nonaqueous solvent and the solute is an additive. The nonaqueous electrolyte contains the above-described sulfur-containing compound as the additive.

Examples of the nonaqueous solvent include cyclic carbonic acid esters, chain carbonic acid esters, cyclic carboxylic acid esters, and chain carboxylic acid esters. Examples of the cyclic carbonic acid esters include propylene carbonate (PC), ethylene carbonate (EC), and vinylene carbonate (VC). Examples of the chain carbonic acid esters include diethyl carbonate (DEC), ethyl methyl carbonate (EMC), and dimethyl carbonate (DMC). Examples of the cyclic carboxylic acid esters include γ-butyrolactone (GBL) and γ-valerolactone (GVL). Examples of the chain carboxylic acid esters include methyl acetate, ethyl acetate, propyl acetate, methyl propionate (MP), and ethyl propionate (EP). One nonaqueous solvent may be used alone, or two or more nonaqueous solvents may be used in combination.

Examples of the lithium salt that can be used include lithium salts of chlorine-containing acids (e.g., LiClO₄, LiAlCl₄, and LiB₁₀Cl₁₀ ), lithium salts of fluorine-containing acids (e.g., LiPF₆, LiPF₂O₂, LiBF₄, LiSbF₆, LiAsF₆, LiCF₃SO₃, and LiCF₃CO₂), lithium salts of fluorine-containing acid imides (e.g., LiN (FSO₂)₂, LiN(CF₃SO₂)₂, LiN(CF₃SO₂)(C₄F₉SO₂), and LiN(C₂F₅SO₂)₂), and lithium halides (e.g., LiCl, LiBr, and LiI). One lithium salt may be used alone, or two or more lithium salts may be used in combination.

The concentration of the lithium salt in the nonaqueous electrolyte may be 1 mol/liter or more and 2 mol/liter or less, or may be 1 mol/ liter or more and 1.5 mol/ liter or less. By controlling the lithium salt concentration within the above range, an electrolyte solution having high ionic conductivity and appropriate viscosity can be obtained. However, the lithium salt concentration is not limited to the above.

### [Separator]

It is desirable to provide the separator between the positive electrode and the negative electrode. The separator has excellent ion permeability and appropriate mechanical strength and insulating properties. As the separator, a microporous thin film, a woven fabric, or a nonwoven fabric can be used, for example. As a material of the separator, a polyolefin such as polypropylene or polyethylene is preferable.

### <<Supplemental Remarks>>

According to the above description of the embodiments, the following techniques are disclosed.

### (Technique 1)

A secondary battery including:
a positive electrode;
a negative electrode including a negative electrode current collector and a negative electrode active material layer provided on a surface of the negative electrode current collector;
a separator provided between the positive electrode and the negative electrode; and
an electrode group configured by winding the positive electrode and the negative electrode with the separator therebetween;
an electrolyte; and
a battery case that houses the electrode group and the electrolyte,
wherein the negative electrode is located at an outermost periphery of the electrode group,
in the electrode group, the negative electrode at the outermost periphery has a current collector exposed portion where the negative electrode current collector is exposed, and
an expansion percentage of the negative electrode active material layer in negative electrode charging and discharging is higher at edge parts in a widthwise direction thereof than at a central part in the widthwise direction thereof, the widthwise direction being parallel to a winding axis of the negative electrode.

### (Technique 2)

The secondary battery according to Technique 1, wherein a width of the central part in the widthwise direction is 20% to 60% of a width of a part of the negative electrode where the negative electrode active material layer is provided.

### (Technique 3)

The secondary battery according to Technique 1 or 2, wherein a ratio B₁/ B₂ of an expansion percentage B₁ at the central part of the negative electrode active material layer to an expansion percentage B₂ at the edge parts of the negative electrode active material layer is 0.985 or more and less than 1.

### (Technique 4)

The secondary battery according to any one of Techniques 1 to 3, wherein the negative electrode active material layer contains a silicon-containing material, and
a content percentage of the silicon-containing material at the edge parts of the negative electrode active material layer is higher than a content percentage of the silicon-containing material at the central part of the negative electrode active material layer.

### (Technique 5)

The secondary battery according to any one of Techniques 1 to 4, wherein at least during charging, the current collector exposed portion of the negative electrode contacts the battery case.

### [Examples]

Hereinafter, the present disclosure will be specifically described based on examples and comparative examples. However, the present disclosure is not limited to the following examples.

On the assumption that an electrode group was housed in a secondary battery of the type 18700, the contact pressure applied to the electrode group with the expansion of the negative electrode was determined by stress simulation. The analysis software used was ADVENTURE Cluster manufactured by SCSK Corporation. The configuration of the electrode group used for the analysis is indicated below.

### Positive electrode:

Length in winding direction D1: 700 mm
Thickness: 0.200 mm (during discharging)
Number of turns: 18.1 turns
Young's modulus: 1.5 GPa
Poisson's ratio: 0.35

### Negative electrode:

Length in winding direction D1: 800 mm
Thickness: 0.200 mm (during discharging, including thickness of negative electrode active material layer of 0.190 mm)
Number of turns: 21.6 turns
Young's modulus: 1.0 GPa
Poisson's ratio: 0.35

### Separator:

Length in winding direction D1: 780 mm (inner peripheral side), 810 mm (outer peripheral side)
Thickness: 0.0135 mm (during discharging)

### Battery case:

Young's modulus: 190 GPa
Poisson's ratio: 0.3

The negative electrode was equally divided in the widthwise direction D2 into three parts, a central part 16A having a width of W/3 and edge parts 16B and 16C each having a width of W/3 and adjacent to the central part 16A. The distribution of the contact pressure in the electrode group in a charged state was determined while the expansion percentage B₁ at the central part 16A of the negative electrode active material layer was changed, with the expansion percentage B₂ at the edge parts 16B and 16C of the negative electrode active material layer fixed.

The radial position where the contact pressure is the highest in the electrode group was determined. Given that R₁ represents the outer diameter of the electrode group and R₂ represents the inner diameter thereof, the contact pressure was the highest at a position where the distance from the innermost peripheral surface of the electrode group was 20 to 35% of (R₁ - R₂)/2. At the radial position where the contact pressure was the highest, the distribution in the widthwise direction D2 of the contact pressure applied to the negative electrode was determined. A contact pressure P₁ and a contact pressure P₂ were obtained, and a ratio P₁/P₂ of P₁ to P₂ was evaluated as the contact pressure ratio. Here, P₁ represents a contact pressure at the position (center position of the central part 16A) in the widthwise direction D2 where the height of the electrode group from the bottom surface is W/2, and P₂ represents a contact pressure at a position (boundary between the central part 16A and the edge part 16C) in the widthwise direction D2 where the height of the electrode group from the bottom surface is W/3.

Table 1 shows the relationship between the ratio B₁/B₂ of the expansion percentage B₂ to the expansion percentage B₁ of the negative electrode active material layer and the contact pressure ratio P₁/P₂. As shown in Table 2, as the ratio B₁/ B₂ is reduced from 1, the contact pressure ratio P₁/P₂ is reduced and the difference between the contact pressure at the central part 16A and that at the edge parts 16B and 16C reduces. In particular, when the ratio B₁/ B₂ is 0.985 or more and less than 1, the contact pressure ratio P₁/P₂ is a positive value close to 1, and the contact pressure difference can be reduced.

**[Table 1]**

| Expansion percentage ratio B₁/B₂ | Contact pressure ratio P₁/P₂ |
|---|---|
| 1 | 1.039 |
| 0.99 | 1.015 |
| 0.985 | 1.002 |
| 0.98 | 0.992 |

A secondary battery including a negative electrode having the above expansion percentages B₁ and B₂ is produced, for example, by the following production method.

### [Negative Electrode Production]

An Si powder and an SiO₂ powder are mixed in a molar ratio of 1:1, and the resulting mixture is sublimated at 1300°C under a reduced pressure to yield SiO. The resulting SiO was pulverized using a jet mill so as to have an average particle diameter (D50) of 6 µm to obtain an SiO powder. Thereafter, the SiO powder is subjected to carbon coating (C coating) by thermal CVD at 850°C using a mixed gas of argon and propane as a carbon source.

Mixing is performed of 96 parts by mass of graphite powder as a negative electrode active material, 4 parts by mass of the SiO powder, 0.8 parts by mass of carboxymethylcellulose (CMC), 0.1 part by mass of carbon nanotube (CNT), and water. The resulting mixture is mixed with 1.2 parts by mass of styrene-butadiene rubber (SBR) and water to prepare a first negative electrode mixture slurry.

Similarly, 95 parts by mass of graphite powder as a negative electrode active material, 5 parts by mass of the SiO powder, 0.8 parts by mass of carboxymethyl cellulose (CMC), 0.1 parts by mass of carbon nanotube (CNT), and water are mixed. The resulting mixture was mixed with 1.2 parts by mass of styrene-butadiene rubber (SBR) and water to prepare a second negative electrode mixture slurry.

The first negative electrode mixture slurry is applied to the surface of the central part of a copper foil being a negative electrode current collector, and the resulting coated film is dried. Further, the second negative electrode mixture slurry is applied to the surfaces of the edge parts of the copper foil, and the resulting coated films are dried. The coated films are pressed to a predetermined thickness using a rolling roller to obtain a negative electrode in which a negative electrode active material layer formed on both surfaces of the negative electrode current collector.

### [Positive Electrode Production]

A positive electrode mixture slurry is prepared by mixing LiNi_{0.8}Co_{0.15}Al_{0.05}O₂ (NCA) as a positive electrode active material, acetylene black (AB), and polyvinylidene fluoride (PVDF) in a mass ratio of 94:5:1 and by adding thereto an appropriate amount of N-methyl-2-pyrrolidone (NMP). Next, the positive electrode mixture slurry is applied to both surfaces of a positive electrode current collector formed of an aluminum foil. Then, the resulting coated films are dried to form positive electrode mixture layers. The coated films are pressed to a predetermined thickness using a rolling roller to obtain a positive electrode in which the positive electrode active material layers are formed on the respective surfaces of the positive electrode current collector.

### [Electrolyte Solution Preparation]

An electrolyte solution is prepared by adding LiPF₆ as a lithium salt to a mixed solvent containing ethylene carbonate (EC), ethyl methyl carbonate (EMC), and dimethyl carbonate (DMC) in a volume ratio of 3:3:4. The concentration of LiPF₆ in the nonaqueous electrolyte is set to 1.2 mol/liter.

### [Secondary Battery Production]

The positive electrode and the negative electrode are wound around a winding core with a separator formed of a polyethylene-made microporous film therebetween to obtain a cylindrical wound electrode body. An aluminum-made positive electrode lead is welded to a current collector exposed portion of the positive electrode, and a nickel-made negative electrode lead is welded to a current collector exposed portion of the negative electrode.

The electrode body is housed in a bottomed cylindrical outer can. The positive electrode lead is welded to a sealing body, and the negative electrode lead is welded to the inner bottom surface of the outer can. After injecting the nonaqueous electrolyte into the outer can, the opening of the outer can is sealed with the sealing body to produce a nonaqueous electrolyte secondary battery (height 70 mm, diameter 18 mm). In the manner described above, a secondary battery including a negative electrode having an expansion percentage ratio B₁/ B₂ of 0.99 is obtained.

Alternatively, when the content of the SiO powder in the first negative electrode mixture slurry is changed to 3.5 parts by mass relative to 96.5 parts by mass of the graphite powder in the negative electrode production, a secondary battery including a negative electrode having an expansion percentage ratio B₁/ B₂ of 0.985 can be obtained.

Further, when the content of the SiO powder in the first negative electrode mixture slurry is changed to 3 parts by mass relative to 97 parts by mass of the graphite powder in the negative electrode production, a secondary battery including a negative electrode having an expansion percentage ratio B₁/ B₂ of 0.98 can be obtained.

Further, when the content of the SiO powder in the first negative electrode mixture slurry is changed to 5 parts by mass relative to 95 parts by mass of the graphite powder (the same as the second negative electrode mixture slurry) in the negative electrode production, a secondary battery including a negative electrode having an expansion percentage ratio B₁/ B₂ of 1 can be obtained.

Although the present invention has been described in terms of the presently preferred embodiments, it is to be understood that such a disclosure is not to be interpreted as limiting. Various alterations and deformations will no doubt become apparent to those skilled in the art to which the present invention pertains, after having read the above disclosure. Accordingly, it is intended that the appended claims be interpreted to cover all alterations and deformations as fall within the true spirit and scope of the invention.

### [Industrial Applicability]

The secondary battery according to the present disclosure is useful for a main power source of, for example, a mobile communication device, a portable electronic device, or an electric vehicle.

### [Reference Signs List]

10: nonaqueous electrolyte secondary battery, 11: sealing body, 12: valve body, 13: metal plate, 14: insulating member, 15: positive electrode, 15L: positive electrode lead, 16: negative electrode, 16L: negative electrode lead, 17: separator, 18: electrode group, 21: gasket, 22: battery can, 22a: annular groove, 23: second insulating plate, 24: first insulating plate, 161: negative electrode current collector, 162: negative electrode active material layer

## Claims

1. A secondary battery comprising:
a positive electrode;
a negative electrode including a negative electrode current collector and a negative electrode active material layer provided on a surface of the negative electrode current collector;
a separator provided between the positive electrode and the negative electrode; and
an electrode group configured by winding the positive electrode and the negative electrode with the separator therebetween;
an electrolyte; and
a battery case that houses the electrode group and the electrolyte,
wherein the negative electrode is located at an outermost periphery of the electrode group,
the negative electrode at the outermost periphery has a current collector exposed portion where the negative electrode current collector is exposed, and
an expansion percentage of the negative electrode active material layer in negative electrode charging and discharging is higher at edge parts in a widthwise direction thereof than at a central part in the widthwise direction thereof, the widthwise direction being parallel to a winding axis of the negative electrode.

2. The secondary battery according to claim 1,
wherein a width of the central part in the widthwise direction is 20% to 60% of a width of a part of the negative electrode where the negative electrode active material layer is provided.

3. The secondary battery according to claim 1,
wherein a ratio B₁/ B₂ of an expansion percentage B₁ at the central part of the negative electrode active material layer to an expansion percentage B₂ at the edge parts of the negative electrode active material layer is 0.985 or more and less than 1.

4. The secondary battery according to any one of claims 1 to 3,
wherein the negative electrode active material layer contains a silicon-containing material, and
a content percentage of the silicon-containing material at the edge parts of the negative electrode active material layer is higher than a content percentage of the silicon-containing material at the central part of the negative electrode active material layer.

5. The secondary battery according to any one of claims 1 to 3,
wherein at least during charging, the current collector exposed portion of the negative electrode contacts the battery case.
